# EUROPÄISCHE PATENTSCHRIFT

(11) **EP 2 819 861 B1**
(45) Veröffentlichungstag und Bekanntmachung des Hinweises auf die Patenterteilung: **20.04.2016**
(21) Anmeldenummer: 13702416.2
(22) Anmeldetag: 28.01.2013
(51) Int. Cl.: B60G 21/055, B60G 15/06, B60G 11/50, F16C 11/06

(54) **VERBINDUNGSANORDNUNG FÜR EINE FAHRZEUGRADAUFHÄNGUNG**
CONNECTION ARRANGEMENT FOR A MOTOR VEHICLE WHEEL SUSPENSION
ENSEMBLE DE RACCORDEMENT POUR SUSPENSION DE ROUE DE VÉHICULE

(30) Priorität: 28.02.2012 DE 102012202988
(43) Veröffentlichungstag der Anmeldung: 07.01.2015
(73) Patentinhaber: ZF Friedrichshafen AG, 88046 Friedrichshafen (DE)
(72) Erfinder: NACHBAR, Frank, 49088 Osnabrück (DE); RECHTIEN, Martin, 49434 Neuenkirchen (DE); GRUBE, Volker, 49356 Diepholz (DE)
(86) Internationale Anmeldenummer: PCT/EP2013/051524
(87) Internationale Veröffentlichungsnummer: WO 2013/127582

(56) Entgegenhaltungen:
- EP-A1- 0 775 603
- EP-A1- 2 270 344
- EP-A2- 1 953 012
- DE-A1- 19 645 132
- DE-A1-102005 016 933
- DE-A1-102006 056 632
- JP-A- 8 295 116

## Beschreibung

Die Erfindung betrifft eine Verbindungsanordnung für eine Fahrzeugradaufhängung, mit einem Federteller zur Aufnahme einer Fahrzeugfeder, einem Gelenk und einer Verbindungsstrebe, die über das Gelenk gelenkig mit dem Federteller verbunden ist, welches einen sich in einer axialen Richtung erstreckenden und in ein in dem Federteller vorgesehenes Befestigungsloch eingreifenden Befestigungsbereich umfasst.

Aus der EP 1 953 012 A2 ist ein Kugelgelenk bekannt, welches aus einer in einer dünnwandigen Gleitschale gelenkig gelagerten Kugel eines Kugelzapfens gebildet wird, wobei das Ende des Strebenkörpers und die Gleitschale gemeinsam zumindest teilweise mit einer Kunststoffummantelung umspritzt sind, welche die Verbindung zwischen dem Ende des Strebenkörpers und der dünnwandigen Gleitschale des Kugelgelenkes herstellt.

In der Radaufhängung eines Fahrzeugs kann ein solches Kugelgelenk zur Anbindung eines Stabilisators an ein Federbein verwendet werden, wobei die Anbindung üblicherweise über eine Lasche oder Klemmschelle erfolgt, die durch Schweißen oder durch Form- oder Reibschluss an einem Dämpferrohr des Federbeins befestigt ist. Bei einer Schweißverbindung zwischen dem Federbein und dem Kugelgelenk muss der Schweißprozess mit hoher Genauigkeit durchgeführt werden (Dämpferrohr und Lasche bilden unterschiedlich dicke Bauteile). Ferner kann der Schweißprozess zu einem Verzug des Dämpferrohrs führen. Auch fallen bereits bei geringen Stückzahlen hohe Investitionen an. Schließlich baut die Anordnung zur Anbindung des Stabilisators relativ groß, wenn die Möglichkeit bestehen soll, höhere Kräfte übertragen zu können. Bei einer Klemmverbindung zwischen dem Federbein und dem Kugelgelenk kann der Form- oder Reibschluss in Zug- und Druckrichtung nicht mit gleicher Qualität realisiert werden, sodass insbesondere bei hohen Kräften diese Verbindungsart nicht eingesetzt werden kann.

Eine Verbindungsanordnung der eingangs genannten Art ist aus der DE 10 2005 016 933 A1 bekannt. Dabei wird das Befestigungsloch von einer Vertiefung in Form eines Kamins in Verbindung mit einem Befestigungsgewinde gebildet. Das Gelenk ist als Kugelgelenk ausgebildet, welches sich axial an einer Stirnfläche des Kamins abstützen kann. Ferner ist ein Stabilisator über das Gelenk mit dem Federteller verbindbar.

Nachteilig an einer solchen Verbindungsanordnung ist, dass in das Befestigungsloch ein Innengewinde eingebracht werden muss. Ferner ist an dem Befestigungsbereich des Gelenks ein Außengewinde vorzusehen. Das Ausbilden der Gewinde, insbesondere des Innengewindes im Blech des Federtellers, ist aber mit einem hohen Fertigungsaufwand verbunden. Auch kann das Blech des Federtellers zur Ausbildung eines tragfähigen Gewindes zu dünn sein, sodass die Gefahr einer zu geringen Ausreißfestigkeit des Gelenks bei axialen Zugbelastungen besteht.

Ausgehend hiervon liegt der Erfindung die Aufgabe zugrunde, eine Verbindungsanordnung der eingangs genannten mit einem geringen Herstellungsaufwand realisieren zu können. Ferner soll eine hohe Ausreißfestigkeit erzielt werden können.

Diese Aufgabe wird durch eine Verbindungsanordnung nach Anspruch 1 gelöst. Bevorzugte Weiterbildungen der Verbindungsanordnung sind in den Unteransprüchen und in der nachfolgenden Beschreibung gegeben.

Die Verbindungsanordnung für eine Fahrzeugradaufhängung weist einen Federteller zur Aufnahme einer Fahrzeugfeder, ein Gelenk und eine Verbindungsstrebe auf, die über das Gelenk gelenkig mit dem Federteller verbunden ist, welches einen sich in einer axialen Richtung erstreckenden und in ein in dem Federteller vorgesehenes Befestigungsloch eingreifenden Befestigungsbereich umfasst, der das Befestigungsloch durchgreift und außerhalb desselben auf einer dem Gelenk abgewandten Seite des Federtellers unter Ausbildung eines Anlagebereichs umgeformt ist, der axial an dem Federteller abgestützt ist.

Auf die Ausbildung von Gewinden im Befestigungsloch und am Befestigungsbereich kann verzichtet werden, sodass der Herstellungsaufwand trotzt des Umformens zur Ausbildung des Anlagebereichs gering gehalten werden kann. Ferner wird der Anlagebereich außerhalb des Befestigungslochs ausgebildet, sodass eine Abhängigkeit der Ausreißfestigkeit des Kugelgelenks von der Tragfähigkeit eines in dem Befestigungsloch ausgebildeten Innengewindes vermieden werden kann. Insbesondere kann die Fläche, mit welcher der Anlagebereich axial an dem Federteller abgestützt ist, relativ groß ausgebildet werden. Auch ist es möglich, den Federteller in dem Bereich, in dem der Anlagebereich an dem Federteller abgestützt ist, zu versteifen, beispielsweise durch eine geeignete Formgebung, wie z.B. eine Sicke oder dergleichen. Somit ist eine hohe Ausreißfestigkeit des Gelenks bei axialen Zugbelastungen erzielbar. Ferner ist zur Anbindung der Verbindungsstrebe an den Federteller eine Schweißverbindung nicht erforderlich. Ein durch Schweißen hervorgerufener Verzug von Komponenten bzw. die negative Materialbeeinflussung durch starken partiellen Wärmeeintrag kann somit vermieden werden. Ferner kann die Investition für eine Schweißanlage eingespart werden.

Das Gelenk ist bevorzugt mittels des Befestigungsbereichs an dem Federteller befestigt. Das Befestigungsloch ist insbesondere ein Durchgangsloch. Vorzugsweise erstreckt sich das Befestigungsloch in axialer Richtung durch den Federteller hindurch. Bevorzugt ist das Befestigungsloch ein Rundloch. Insbesondere ist dem Befestigungsbereich und/oder dem Befestigungsloch eine in axialer Richtung verlaufende Mittelachse zugeordnet, die vorzugsweise durch den Befestigungsbereich und/oder durch das Befestigungsloch verläuft. Vorteilhaft verläuft die Mittelachse durch die Mitte des Befestigungsbereichs und/oder durch die Mitte des Befestigungslochs. Beispielsweise kann der Befestigungsbereich bezüglich der Mittelachse rotationssymmetrisch ausgebildet sein. Insbesondere verläuft ein das Befestigungsloch begrenzender Rand des Federtellers um die Mittelachse herum.

Vorzugsweise umfasst oder bildet der Anlagebereich eine Anlagefläche, mittels welcher der Anlagebereich axial an dem Federteller abgestützt ist oder anliegt. Die Anlagefläche liegt bevorzugt außerhalb des Befestigungslochs. Insbesondere ist die Anlagefläche dem Gelenk zugewandt. Vorteilhaft ist die Anlagefläche eben oder im Wesentlichen eben. Insbesondere ist die Anlagefläche ringförmig. Vorzugsweise verläuft die Anlagefläche um die Mittelachse herum. Bevorzugt verläuft die Anlagefläche senkrecht oder im Wesentlichen senkrecht zur axialen Richtung.

Der Anlagebereich ist vorzugsweise außerhalb des Befestigungslochs angeordnet. Insbesondere ist der Anlagebereich auf der dem Gelenk abgewandten Seite des Federtellers angeordnet. Bevorzugt ist der Anlagebereich auf der dem Gelenk abgewandten Seite des Federtellers axial an dem Federteller abgestützt. Vorteilhaft ist der Anlagebereich an einem das Befestigungsloch umringenden und/oder um die Mittelachse herumlaufenden, anlagebereichsseitigen Randbereich des Federtellers axial abgestützt. Dieser Randbereich liegt insbesondere auf der dem Gelenk abgewandten Seite des Federtellers und/oder ist insbesondere dem Gelenk abgewandt. Bevorzugt liegt der Anlagebereich axial an dem Federteller an, insbesondere an dem anlagebereichsseitigen Randbereich.

Vorzugsweise umfasst oder bildet der Randbereich und/oder der Federteller eine anlagebereichsseitige Stützfläche, an der die Anlagefläche axial abgestützt ist oder anliegt. Insbesondere liegt die anlagebereichsseitige Stützfläche auf der dem Gelenk abgewandten Seite des Federtellers. Die anlagebereichsseitige Stützfläche liegt bevorzugt außerhalb des Befestigungslochs. Insbesondere ist die anlagebereichsseitige Stützfläche dem Gelenk abgewandt. Vorteilhaft ist die anlagebereichsseitige Stützfläche eben oder im Wesentlichen eben. Insbesondere ist die anlagebereichsseitige Stützfläche ringförmig. Vorzugsweise verläuft die anlagebereichsseitige Stützfläche um die Mittelachse herum. Bevorzugt verläuft die anlagebereichsseitige Stützfläche senkrecht oder im Wesentlichen senkrecht zur axialen Richtung. Vorteilhaft ist die anlagebereichsseitige Stützfläche durch einen Bereich der Oberfläche des Federtellers gebildet.

Gemäß einer Weiterbildung weist das Gelenk einen Anschlag auf, der auf einer dem Gelenk zugewandten Seite des Federtellers axial, insbesondere axial entgegengesetzt zu dem Anlagebereich, an dem Federteller abgestützt ist. Insbesondere ist der Anschlag auf der dem Gelenk zugewandten Seite des Federtellers angeordnet. Der Federteller ist somit axial zwischen dem Anlagebereich und Anschlag angeordnet und/oder der Anlagebereich und der Anschlag liegen in axialer Richtung auf unterschiedlichen Seiten des Federtellers. Bevorzugt sind der Anlagebereich und der Anschlag in axialer Richtung einander entgegengesetzt an dem Federteller abgestützt. Insbesondere ist der Anschlag relativ zu dem Befestigungsbereich und/oder dem Anlagebereich ortsfest. Vorteilhaft ist der Anschlag an einem das Befestigungsloch umringenden und/oder um die Mittelachse herumlaufenden, gelenkseitigen Randbereich des Federtellers axial, insbesondere axial entgegengesetzt zu dem Anlagebereich, abgestützt. Dieser Randbereich liegt insbesondere auf der dem Gelenk zugewandten Seite des Federtellers und/oder ist insbesondere dem Gelenk zugewandt. Bevorzugt liegt der Anschlag axial, insbesondere axial entgegengesetzt zu dem Anlagebereich, an dem Federteller an, insbesondere an dem gelenkseitigen Randbereich. Durch den Anlagebereich und den Anschlag ist das Gelenk axial formschlüssig an dem Federteller festgelegt. Der Anschlag kann innerhalb und/oder außerhalb des Befestigungslochs angeordnet sein. Beispielsweise ist der Anschlag ringförmig. Vorzugsweise verläuft der Anschlag um die Mittelache herum. Der Befestigungsbereich steht z.B. axial von dem Anschlag vor, der in diesem Fall insbesondere den Befestigungsbereich umringt.

Vorzugsweise umfasst oder bildet der Randbereich und/oder der Federteller eine gelenkseitige Stützfläche, an welcher der Anschlag axial, insbesondere axial entgegengesetzt zu dem Anlagebereich, abgestützt ist oder anliegt. Vorteilhaft liegt die gelenkseitige Stützfläche auf der dem Gelenk zugewandten Seite des Federtellers. Die gelenkseitige Stützfläche kann innerhalb und/oder außerhalb des Befestigungslochs liegen. Insbesondere ist die gelenkseitige Stützfläche dem Gelenk zugewandt. Vorteilhaft ist die gelenkseitige Stützfläche durch einen Bereich der Oberfläche des Federtellers gebildet. Beispielsweise ist die gelenkseitige Stützfläche ringförmig. Vorzugsweise verläuft die gelenkseitige Stützfläche um die Mittelachse herum.

Gemäß einer ersten Variante ist der Anschlag eben ausgebildet. Vorzugsweise erstreckt sich der Anschlag senkrecht zur axialen Richtung. Die gelenkseitige Stützfläche ist bevorzugt eben ausgebildet. Vorteilhaft verläuft die gelenkseitige Stützfläche senkrecht zur axialen Richtung.

Gemäß einer zweiten Variante ist der Anschlag konisch ausgebildet und verjüngt sich insbesondere mit abnehmendem Abstand zu dem Anlagebereich. Vorzugsweise ist der Anschlag rotationssymmetrisch bezüglich einer axial verlaufenden Rotationsachse, die vorteilhaft mit der Mittelachse zusammenfällt. Bevorzugt ist das Befestigungsloch und/oder der gelenkseitige Randbereich und/oder die gelenkseitige Stützfläche zumindest bereichsweise konisch ausgebildet und verjüngt sich im konischen Bereich insbesondere mit abnehmendem Abstand zum Anlagebereich. Vorteilhaft ist der konische Bereich rotationssymmetrisch zu einer oder der axial verlaufenden Rotationsachse.

Gemäß einer Ausgestaltung ist das Gelenk als Kugelgelenk ausgebildet. Dazu weist das Gelenk insbesondere ein Gehäuse und einen eine Gelenkkugel umfassenden Kugelzapfen auf, der mit seiner Gelenkkugel bewegbar in dem Gehäuse gelagert ist und sich aus diesem heraus erstreckt. Vorteilhaft erstreckt sich der Kugelzapfen axial oder im Wesentlichen axial aus dem Gehäuse heraus. Das Gelenk bildet bevorzugt ein Axialgelenk, insbesondere ein Axialkugelgelenk. Vorteilhaft ist die Anlagefläche und/oder der gelenkseitige Randbereich und/oder die gelenkseitige Stützfläche dem Gehäuse zugewandt. Bevorzugt ist der anlagebereichsseitige Randbereich und/oder die anlagebereichsseitige Stützfläche dem Gehäuse abgewandt. Vorzugsweise erstreckt sich der Befestigungsbereich von dem Gehäuse weg.

Gemäß einer ersten Alternative ist der Befestigungsbereich durch den Kugelzapfen gebildet, wobei die Verbindungsstrebe insbesondere fest, vorzugsweise starr, mit dem Gehäuse verbunden ist oder dieses umfasst. Der Anschlag ist bevorzugt an dem Kugelzapfen vorgesehen.

Gemäß einer zweiten Alternative ist der Befestigungsbereich an dem Gehäuse vorgesehen, wobei die Verbindungsstrebe insbesondere mit dem Kugelzapfen fest, vorzugsweise starr, verbunden ist und/oder diesen umfasst oder bildet. Der Befestigungsbereich ist bevorzugt fest, insbesondere starr, mit dem Gehäuse verbunden und/oder einstückig mit diesem ausgebildet. Vorteilhaft bildet der Befestigungsbereich einen Gehäusefortsatz oder -vorsprung. Beispielsweise ist der Befestigungsbereich in Form eines Zapfens ausgebildet. Der Anschlag ist bevorzugt an dem Gehäuse vorgesehen. Vorteilhaft ist der Anschlag durch einen Außenflächenbereich des Gehäuses, insbesondere durch einen dem Federteller zugewandten Außenflächenbereich des Gehäuses, gebildet. Der Anschlag kann aber auch am Befestigungsbereich vorgesehen sein.

Bevorzugt ist das Gehäuse mit einer Zapfenöffnung versehen, durch welche hindurch sich der Kugelzapfen aus dem Gehäuse heraus erstreckt. Insbesondere ist die Zapfenöffnung, vorzugsweise in axialer Richtung, auf einer dem Befestigungsbereich gegenüberliegenden Seite des Gehäuses vorgesehen. Vorteilhaft ist die Zapfenöffnung, insbesondere in axialer Richtung, auf einer dem Anschlag und/oder dem den Anschlag bildenden Außenflächenbereich gegenüberliegenden Seite des Gehäuses vorgesehen.

Gemäß einer Weiterbildung ist eine Verdrehsicherung vorgesehen, mittels welcher der Befestigungsbereich und/oder das Gehäuse gegen ein Verdrehen relativ zu dem Federteller, insbesondere um die axial verlaufende Mittelachse des Befestigungslochs, gesichert ist. Vorteilhaft ist dazu der Befestigungsbereich und/oder der Anschlag und/oder das Gehäuse mit wenigstens einer Formschlusskontur versehen ist, welche unter Ausbildung der Verdrehsicherung formschlüssig mit dem Federteller ineinander greift. Beispielsweise umfasst die Formschlusskontur eine Rändelung, einen Vorsprung (z.B. in Form einer Nase) oder eine Vertiefung (z.B. in Form einer Nut). Die Formschlusskontur greift bevorzugt mit einer an dem Federteller vorgesehenen Gegenformschlusskontur formschlüssig ineinander. Beispielsweise umfasst die Gegenformschlusskontur eine Vertiefung oder Nut, in welche der Vorsprung der Formschlusskontur eingreift, oder die Gegenformschlusskontur umfasst z.B. einen Vorsprung, der in die Vertiefung der Formschlusskontur eingreift. Ferner kann der Befestigungsbereich und/oder der Anschlag und/oder das Gehäuse mit dem Federteller über eine Nut-Feder-Verbindung oder Welle-Nabe-Verbindung verbunden sein, um die Verdrehsicherung auszubilden. Im Falle einer Rändelung drückt sich diese insbesondere in die Oberfläche des Federtellers ein. Selbstverständlich ist es auch möglich, als Verdrehsicherung eine Rändelung an dem Federteller vorzusehen, die sich insbesondere in die Oberfläche des Gehäuses und/oder des Anschlags eindrückt.

Gemäß einer Ausgestaltung ist der Befestigungsbereich zur Ausbildung des Anlagebereichs durch Rollen, Taumeln, Drücken oder durch andere bekannte Prozesse umgeformt. Bevorzugt weist der Befestigungsbereich, insbesondere vor der Ausbildung des Anlagebereichs, an einer freien Stirnseite eine Ausnehmung und einen diese umringenden Rand auf. Insbesondere ist oder wird dieser Rand unter Ausbildung des Anlagebereichs umgeformt. Das Umformen eines solchen Rands ist in der Regel mit weniger Kraftaufwand verbunden als wenn der Befestigungsbereich im Umformbereich aus Vollmaterial besteht, was aber dennoch möglich ist. Die freie Stirnseite des Befestigungsbereichs ist insbesondere dem Gelenk und/oder dem Gehäuse abgewandt.

Gemäß einer Weiterbildung ist die Verbindungsstrebe durch einen Stabilisator oder durch einen mit einem Stabilisator verbundenen Stabilisatorlenker oder durch einen Teil desselben gebildet. Bevorzugt ist der Stabilisator als Drehstabfeder ausgebildet. Insbesondere ist der Stabilisator mittels des Stabilisatorlenkers an den Federteller angelenkt. Bevorzugt ist der Federteller an einem Dämpfer, insbesondere an einem Außenrohr des Dämpfers, vorgesehen und/oder befestigt.

Gemäß einer Weiterbildung ist ein Radträger mittels wenigstens eines Radlenkers gelenkig mit einem Fahrzeugaufbau eines Fahrzeugs verbunden und an dem Fahrzeugaufbau mittels einer oder der Fahrzeugfeder federnd abgestützt, die radträgerseitig an dem mit dem Radträger oder dem Radlenker verbundenen Federteller abgestützt ist. Vorteilhaft ist der Federteller über den Dämpfer mit dem Radträger oder dem Radlenker verbunden. Insbesondere sind der Radträger oder der Radlenker auch über den Dämpfer mit dem Fahrzeugaufbau verbunden. Beispielsweise ist das Außenrohr des Dämpfers mit dem Radträger oder dem Radlenker verbunden, wobei ein in dem Dämpferrohr verschiebbar geführtes Dämpferinnenteil mit dem Fahrzeugaufbau verbunden ist. Vorzugsweise verläuft der Dämpfer zumindest bereichsweise innerhalb der Fahrzeugfeder, die vorteilhaft als Schraubenfeder ausgebildet ist. Der Stabilisator ist bevorzugt an dem Fahrzeugaufbau gelagert. An dem Radträger ist vorzugsweise ein Fahrzeugrad um eine Raddrehachse drehbar gelagert.

Der Stabilisatorlenker umfasst bevorzugt einen langgestreckten Körper, der an einem Ende mit dem Gelenk verbunden ist. Vorteilhaft bildet das Gehäuse ein erstes Gelenkteil, und der Kugelzapfen bildet ein zweites Gelenkteil, wobei eines der Gelenkteile mit dem Federteller fest, insbesondere starr, verbunden ist und ein anderes der Gelenkteile mit dem langgestreckten Körper fest, insbesondere starr, verbunden oder einstückig ausgebildet ist.

Gemäß einer oder der ersten Alternative ist der langgestreckte Körper mit dem Gehäuse verbunden oder umfasst oder bildet dieses, wobei der Kugelzapfen mit dem Federteller verbunden ist. Gemäß einer anderen oder der zweiten Alternative ist der langgestreckte Körper mit dem Kugelzapfen verbunden oder umfasst oder bildet diesen, wobei das Gehäuse mit dem Federteller verbunden ist.

Gemäß einer Weiterbildung umfasst der Stabilisatorlenker zwei Gelenke, von denen eines das zuvor beschriebene Gelenk bildet. Das andere der Gelenks ist bevorzugt an einem anderen Ende des langgestreckten Körpers angeordnet. Mittels des anderen Gelenks ist der Stabilisatorlenker bevorzugt an den Stabilisator angelenkt. Insbesondere verbindet der langgestreckte Körper die beiden Gelenke miteinander.

Der Kugelzapfen besteht bevorzugt aus Metall, insbesondere aus Stahl. Ferner besteht das Gehäuse bevorzugt aus Metall, insbesondere aus Stahl. Der Kugelzapfen ist bevorzugt unter Zwischenschaltung einer Kugelschale, die insbesondere im Gehäuse angeordnet ist, bewegbar, vorzugsweise drehbar und/oder schwenkbar, in dem Gehäuse gelagert. Vorzugsweise umschließt die Kugelschale die Gelenkkugel. Die Kugelschale besteht insbesondere aus Kunststoff. Der Federteller besteht bevorzugt aus Metall, insbesondere aus Stahl. Vorzugsweise besteht der Federteller aus Blech.

Die Erfindung wird nachfolgend anhand einer bevorzugten Ausführungsform unter Bezugnahme auf die Zeichnung beschrieben. In der Zeichnung zeigen:
Fig. 1 eine Schnittansicht durch eine Verbindungsanordnung gemäß einer Ausführungsform,
Fig. 2 eine teilweise geschnittene Ansicht der Verbindungsanordnung und
Fig. 3 eine schematische Darstellung einer Fahrzeugradaufhängung mit der Verbindungsanordnung.

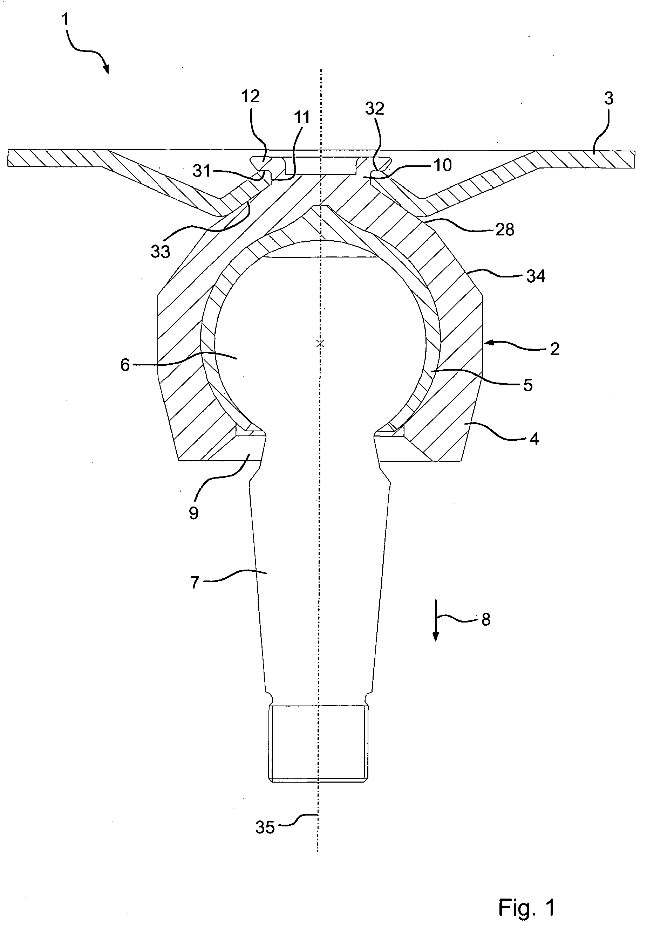

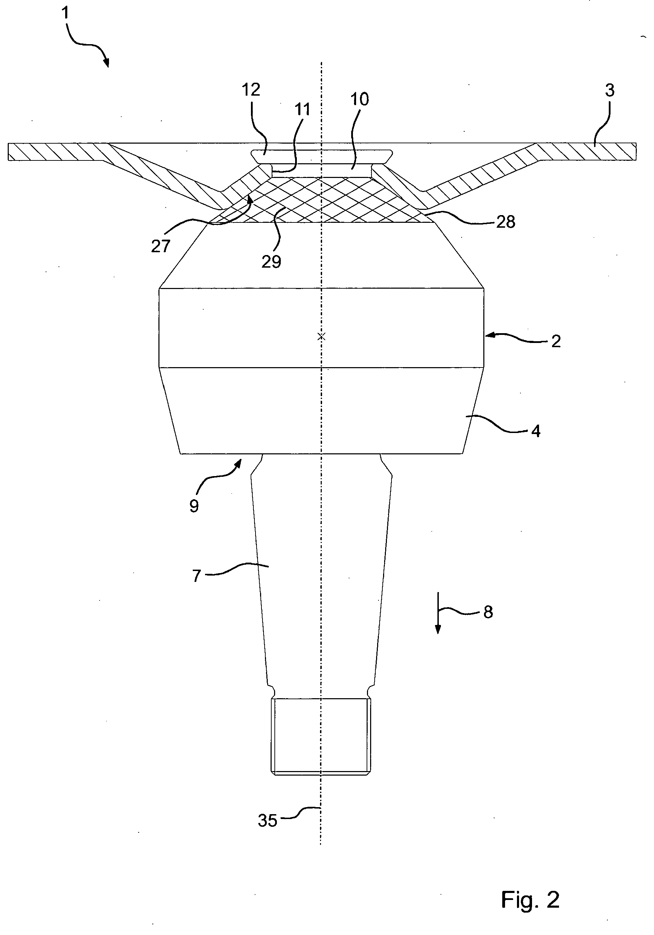

Aus den Fig. 1 und 2 unterschiedliche Ansichten einer Verbindungsanordnung 1 gemäß einer Ausführungsform ersichtlich, wobei ein Axialkugelgelenk 2 formschlüssig an einem Federteller 3 festgelegt ist. Das Kugelgelenk 2 umfasst ein Gehäuse 4, in dem eine Kugelschale 5 angeordnet ist, in welcher ein eine Gelenkkugel 6 umfassender Kugelzapfen 7 mit seiner Gelenkkugel 6 gleitfähig gelagert ist. Der Kugelzapfen 7 erstreckt sich in einer axialen Richtung 8 durch eine in dem Gehäuse 4 vorgesehene Zapfenöffnung 9 hindurch aus dem Gehäuse 4 heraus. Auf der der Zapfenöffnung 9 gegenüberliegenden Seite des Gehäuses 4 ist ein Befestigungsbereich 10 in Form eines axialen Fortsatzes des Gehäuses 4 vorgesehen, der sich axial durch ein in dem Federteller 3 vorgesehenes Befestigungsloch 11 hindurch erstreckt und auf der dem Kugelgelenk 2 abgewandten Seite des Federtellers 3 derart umgeformt ist, dass der umgeformte Bereich des Befestigungsbereichs 10 einen Anlagebereich 12 bildet, der auf der dem Kugelgelenk 2 abgewandten Seite des Federtellers 3 mit einer ringförmigen Anlagefläche 31 axial an einer um eine Mittelachse 35 des Befestigungslochs 11 umlaufenden Stützfläche 32 des Federtellers 3 anliegt. Die Anlagefläche 31 des Anlagebereichs 12 ist dabei dem Gehäuse 4 zugewandt, und die Stützfläche 32 ist dem Gehäuse 4 abgewandt. Das Umformen des Befestigungsbereichs 10 kann z.B. durch Rollen, Taumeln oder Drücken erfolgen.

Ferner weist der Federteller 3 auf seiner dem Gehäuse 4 zugewandten Seite eine konische Vertiefung 27 auf, die in das Befestigungsloch 11 übergeht und durch eine um die Mittelachse 35 umlaufende Stützfläche 33 des Federtellers 3 gebildet ist, die dem Gehäuse 4 zugewandt ist. Ein an dem Gehäuse 4 vorgesehener, konischer Anschlag 28 greift in die Vertiefung 27 ein und liegt an der Stützfläche 33 an. Das Gehäuse 4 ist somit an dem Federteller 3 axial formschlüssig festgelegt. Der Anschlag 28 ist durch einen dem Federteller 3 zugewandten Bereich der Außenfläche 34 des Gehäuses 4 gebildet und zusätzlich mit einer Rändelung 29 versehen, die sich in die Oberfläche des Federtellers 3 eindrückt und somit als Verdrehsicherung dient, sodass eine Verdrehung des Gehäuses 4 relativ zu dem Federteller 3 um die Mittelachse 35 verhindert werden kann.

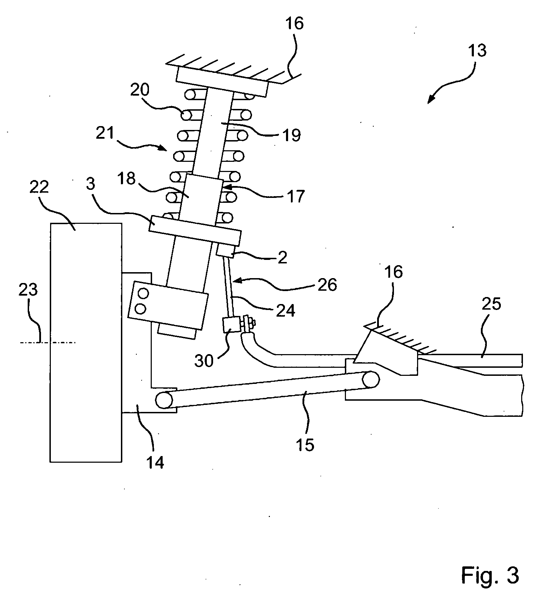

Aus Fig. 3 ist eine schematische Ansicht einer Fahrzeugradaufhängung 13 ersichtlich, wobei ein Radträger 14 mittels eines Querlenkers 15 gelenkig an einem Fahrzeugaufbau 16 eines Fahrzeugs gelagert ist. Ferner ist der Radträger 14 mittels eines Dämpfers 17 mit dem Fahrzeugaufbau 16 verbunden. Der Dämpfer 17 umfasst ein an dem Radträger 14 befestigtes Außenrohr 18, in dem ein Innenteil 19 des Dämpfers 17 geführt ist, welches mit dem Fahrzeugaufbau 16 verbunden ist. An dem Außenrohr 18 ist der Federteller 3 befestigt, auf dem eine Fahrzeugfeder 20 abgestützt ist, mittels welcher der Radträger 14 federnd an dem Fahrzeugaufbau 16 abgestützt ist. Der Dämpfer 17 erstreckt sich durch die Feder 20 hindurch, wobei der Dämpfer 17 mit dem Federteller 3 und die Fahrzeugfeder 20 zusammen eine Federdämpfereinheit 21 bilden, die auch als Federbein bezeichnet wird. An dem Radträger 14 ist ein Fahrzeugrad 22 um eine Raddrehachse 23 drehbar gelagert.

Der Kugelzapfen 7 ist mit einer Verbindungsstrebe 24 in Form eines langgestreckten Körpers verbunden oder einstückig ausgebildet, die an ihrem dem Kugelgelenk 2 abgewandten Ende über ein anderes Gelenk 30 an einem an dem Fahrzeugaufbau 16 gelagerten Stabilisator 25 angelenkt ist, der als Drehstabfeder ausgebildet ist. Die Verbindungsstrebe 24 ist Teil eines Stabilisatorlenkers 26, der auch die Gelenke 2 und 30 umfasst. Das Gelenk 30 ist bevorzugt ein Kugelgelenk.

### Bezugszeichen

- 1: Verbindungsanordnung
- 2: Axialkugelgelenk
- 3: Federteller
- 4: Gehäuse
- 5: Kugelschale
- 6: Gelenkkugel des Kugelzapfens
- 7: Kugelzapfen
- 8: axiale Richtung
- 9: Zapfenöffnung im Gehäuse
- 10: Befestigungsbereich / axialer Fortsatz
- 11: Befestigungsloch im Federteller
- 12: Anlagebereich
- 13: Radaufhängung
- 14: Radträger
- 15: Querlenker
- 16: Fahrzeugaufbau
- 17: Dämpfer
- 18: Außenrohr des Dämpfers
- 19: Innenteil des Dämpfers
- 20: Fahrzeugfeder
- 21: Feder-Dämpfer-Einheit
- 22: Fahrzeugrad
- 23: Raddrehachse
- 24: Verbindungsstrebe
- 25: Stabilisator
- 26: Stabilisatorlenker
- 27: konische Vertiefung im Federteller
- 28: Anschlag
- 29: Rändelung
- 30: Gelenk
- 31: Anlagefläche
- 32: anlagebereichsseitige Stützfläche
- 33: gelenkseitige oder gehäuseseitige Stützfläche
- 34: Außenfläche des Gehäuses
- 35: Mittelachse

## Patentansprüche

1. Verbindungsanordnung für eine Fahrzeugradaufhängung, mit einem Federteller (3) zur Aufnahme einer Fahrzeugfeder (20), einem Gelenk (2) und einer Verbindungsstrebe (24), die über das Gelenk (2) gelenkig mit dem Federteller (3) verbunden ist, welches einen sich in einer axialen Richtung (8) erstreckenden und in ein in dem Federteller (3) vorgesehenes Befestigungsloch (11) eingreifenden Befestigungsbereich (10) umfasst, **dadurch gekennzeichnet, dass** der Befestigungsbereich (10) das Befestigungsloch (11) durchgreift und außerhalb desselben auf einer dem Gelenk (2) abgewandten Seite des Federtellers (3) unter Ausbildung eines Anlagebereichs (12) umgeformt ist, der axial an dem Federteller (3) abgestützt ist.

2. Verbindungsanordnung nach Anspruch 1, **dadurch gekennzeichnet, dass** das Gelenk (2) einen Anschlag (28) aufweist, der auf einer dem Gelenk (2) zugewandten Seite des Federtellers (3) axial entgegengesetzt zu dem Anlagebereich (12) an dem Federteller (3) abgestützt ist.

3. Verbindungsanordnung nach Anspruch 1 oder 2, **dadurch gekennzeichnet, dass** das Gelenk (2) ein Gehäuse (4) und einen eine Gelenkkugel (6) umfassenden Kugelzapfen (7) aufweist, der mit seiner Gelenkkugel (6) bewegbar in dem Gehäuse (4) gelagert ist und sich axial oder im Wesentlichen axial aus diesem heraus erstreckt, wobei der Befestigungsbereich (10) an dem Gehäuse (4) vorgesehen ist und die Verbindungsstrebe (24) mit dem Kugelzapfen (7) fest verbunden ist oder diesen umfasst.

4. Verbindungsanordnung nach Anspruch 3, **dadurch gekennzeichnet, dass** das Gehäuse (4) mit einer Zapfenöffnung (9) versehen ist, durch welche hindurch sich der Kugelzapfen (7) aus dem Gehäuse (4) heraus erstreckt, wobei die Zapfenöffnung (9) in axialer Richtung (8) auf einer dem Befestigungsbereich (10) gegenüberliegenden Seite des Gehäuses (4) vorgesehen ist, der sich von diesem wegerstreckt.

5. Verbindungsanordnung nach Anspruch 2 und nach Anspruch 3 oder 4, **dadurch gekennzeichnet, dass** der Anschlag (28) durch einen dem Federteller (3) zugewandten Bereich der Außenfläche (34) des Gehäuse (4) gebildet ist.

6. Verbindungsanordnung nach einem der Ansprüche 3 bis 5, **dadurch gekennzeichnet, dass** der Befestigungsbereich (10) fest mit dem Gehäuse (4) verbunden oder einstückig mit diesem ausgebildet ist.

7. Verbindungsanordnung nach einem der Ansprüche 3 bis 6, **gekennzeichnet durch** eine Verdrehsicherung (29), mittels welcher das Gehäuse (4) gegenüber einer Verdrehung relativ zu dem Federteller (3) gesichert ist.

8. Verbindungsanordnung nach einem der vorangehenden Ansprüche, **dadurch gekennzeichnet, dass** zur Ausbildung des Anlagebereichs (12) der Befestigungsbereich (10) durch Rollen, Taumeln oder Drücken umgeformt ist.

9. Verbindungsanordnung nach einem der vorangehenden Ansprüche, **dadurch gekennzeichnet, dass** die Verbindungsstrebe (24) durch einen Stabilisator oder durch einen mit einem Stabilisator (25) verbundenen Stabilisatorlenker (26) oder durch einen Teil desselben gebildet ist.

10. Verbindungsanordnung nach Anspruche 9, **dadurch gekennzeichnet, dass** der Stabilisator (25) als Drehstabfeder ausgebildet und mittels des Stabilisatorlenkers (26) an dem Federteller (3) angelenkt ist.

11. Verbindungsanordnung nach einem der vorangehenden Ansprüche, **dadurch gekennzeichnet, dass** ein Radträger (14) mittels wenigstens eines Radlenkers (15) gelenkig mit einem Fahrzeugaufbau (16) eines Fahrzeugs verbunden und an dem Fahrzeugaufbau (16) mittels der Fahrzeugfeder (20) federnd abgestützt ist, die radträgerseitig an dem mit dem Radträger (14) oder dem Radlenker (15) verbundenen Federteller (3) abgestützt ist.

12. Verbindungsanordnung nach Anspruch 11 und nach Anspruch 9 oder 10, **dadurch gekennzeichnet, dass** der Stabilisator (25) an dem Fahrzeugaufbau (16) gelagert ist.

## Claims

1. Connecting arrangement for a vehicle wheel suspension system, having a spring collar (3) for receiving a vehicle spring (20), a joint (2) and a connecting strut (24) which is connected in an articulated manner via the joint (2) to the spring collar (3), which joint (2) comprises a fastening region (10) which extends in an axial direction (8) and engages into a fastening hole (11) which is provided in the spring collar (3), **characterized in that** the fastening region (10) reaches through the fastening hole (11) and is reshaped outside of the latter on a side of the spring collar (3) which faces away from the joint (2), with the formation of a bearing region (12) which is supported axially on the spring collar (3).

2. Connecting arrangement according to Claim 1, **characterized in that** the joint (2) has a stop (28) which is supported on the spring collar (3) in an axially opposed manner with respect to the bearing region (12) on a side of the spring collar (3) which faces the joint (2).

3. Connecting arrangement according to Claim 1 or 2, **characterized in that** the joint (2) has a housing (4) and a ball pivot (7) which comprises a joint ball (6), is mounted movably in the housing (4) by way of its joint ball (6), and extends axially or substantially axially out of the said housing (4), the fastening region (10) being provided on the housing (4), and the connecting strut (24) being connected fixedly to the ball pivot (7) or enclosing the latter.

4. Connecting arrangement according to Claim 3, **characterized in that** the housing (4) is provided with a pivot opening (9), through which the ball pivot (7) extends out of the housing (4), the pivot opening (9) being provided in the axial direction (8) on a side of the housing (4) which lies opposite the fastening region (10) and extends away from the latter.

5. Connecting arrangement according to Claim 2 and according to Claim 3 or 4, **characterized in that** the stop (28) is formed by a region of the outer face (34) of the housing (4), which region faces the spring collar (3).

6. Connecting arrangement according to one of Claims 3 to 5, **characterized in that** the fastening region (10) is connected fixedly to the housing (4) or is configured in one piece with the latter.

7. Connecting arrangement according to one of Claims 3 to 6, **characterized by** an anti-rotation safeguard (29), by means of which the housing (4) is secured against a rotation relative to the spring collar (3).

8. Connecting arrangement according to one of the preceding claims, **characterized in that**, in order to form the bearing region (12), the fastening region (10) is reshaped by way of rolling, tumbling or pressing.

9. Connecting arrangement according to one of the preceding claims, **characterized in that** the connecting strut (24) is formed by an anti-roll bar, or by an anti-roll bar link (26) which is connected to an anti-roll bar (25), or by a part thereof.

10. Connecting arrangement according to Claim 9, **characterized in that** the anti-roll bar (25) is configured as a torsional spring and is articulated on the spring collar (3) by means of the anti-roll bar link (26).

11. Connecting arrangement according to one of the preceding claims, **characterized in that** a wheel support (14) is connected to a vehicle body (16) of a vehicle in an articulated manner by means of at least one wheel link (15) and is supported in a sprung manner on the vehicle body (16) by means of the vehicle spring (20) which is supported on the wheel support side on the spring collar (3) which is connected to the wheel support (14) or the wheel link (15).

12. Connecting arrangement according to Claim 11 and according to Claim 9 or 10, **characterized in that** the anti-roll bar (25) is mounted on the vehicle body (16).

## Revendications

1. Ensemble de raccordement pour une suspension de roue de véhicule, comprenant une coupelle de ressort (3) pour recevoir un ressort de véhicule (20), une articulation (2) et une entretoise de liaison (24) qui est raccordée par le biais de l'articulation (2) de manière articulée à la coupelle de ressort (3), laquelle coupelle de ressort comprend une région de fixation (10) s'étendant dans la direction axiale (8) et s'engageant dans un trou de fixation (11) prévu dans la coupelle de ressort (3), **caractérisé en ce que** la région de fixation (10) vient en prise à travers le trou de fixation (11) et est formée à l'extérieur de celui-ci sur un côté de la coupelle de ressort (3) opposé à l'articulation (2) en réalisant une région d'appui (12) qui est supportée axialement contre la coupelle de ressort (3).

2. Ensemble de raccordement selon la revendication 1, **caractérisé en ce que** l'articulation (2) présente une butée (28) qui est supportée sur un côté de la coupelle de ressort (3) tourné vers l'articulation (2) axialement à l'opposé de la région d'appui (12) contre la coupelle de ressort (3).

3. Ensemble de raccordement selon la revendication 1 ou 2, **caractérisé en ce que** l'articulation (2) présente un boîtier (4) et un tourillon sphérique (7) comprenant une rotule d'articulation (6), lequel tourillon sphérique est supporté avec sa rotule d'articulation (6) de manière déplaçable dans le boîtier (4) et s'étend axialement ou essentiellement axialement hors de celui-ci, la région de fixation (10) étant prévue au niveau du boîtier (4) et l'entretoise de liaison (24) étant connectée fixement au tourillon sphérique (7) ou entourant celui-ci.

4. Ensemble de raccordement selon la revendication 3, **caractérisé en ce que** le boîtier (4) est pourvu d'une ouverture de tourillon (9) à travers laquelle le tourillon sphérique (7) s'étend hors du boîtier (4), l'ouverture de tourillon (9) étant prévue dans la direction axiale (8) sur un côté du boîtier (4) opposé à la région de fixation (10), qui s'étend à l'écart de celle-ci.

5. Ensemble de raccordement selon la revendication 2 et selon la revendication 3 ou 4, **caractérisé en ce que** la butée (28) est formée par une région de la surface extérieure (34) du boîtier (4) tournée vers la coupelle de ressort (3).

6. Ensemble de raccordement selon l'une quelconque des revendications 3 à 5, **caractérisé en ce que** la région de fixation (10) est connectée fixement au boîtier (4) ou est réalisée d'une seule pièce avec celui-ci.

7. Ensemble de raccordement selon l'une quelconque des revendications 3 à 6, **caractérisé par** une fixation antirotation (29) au moyen de laquelle le boîtier (4) est fixé contre toute rotation par rapport à la coupelle de ressort (3).

8. Ensemble de raccordement selon l'une quelconque des revendications précédentes, **caractérisé en ce que** pour réaliser la région d'appui (12), la région de fixation (10) est formée par laminage, nutation ou pressage.

9. Ensemble de raccordement selon l'une quelconque des revendications précédentes, **caractérisé en ce que** l'entretoise de liaison (24) est formée par un stabilisateur ou par un bras de stabilisateur (26) connecté à un stabilisateur (25) ou par une partie de celui-ci.

10. Ensemble de raccordement selon la revendication 9, **caractérisé en ce que** le stabilisateur (25) est réalisé sous forme de ressort à barre de torsion et est articulé au moyen du bras de stabilisateur (26) à la coupelle de ressort (3).

11. Ensemble de raccordement selon l'une quelconque des revendications précédentes, **caractérisé en ce qu'**un support de roue (14) est connecté de manière articulée à une caisse de véhicule (16) au moyen d'au moins un bras oscillant de roue (15) et est supporté à ressort sur la caisse de véhicule (16) au moyen du ressort de véhicule (20) qui est supporté du côté du support de roue à la coupelle de ressort (3) connectée au support de roue (14) ou au bras oscillant de roue (15).

12. Ensemble de raccordement selon la revendication 11 et selon la revendication 9 ou 10, **caractérisé en ce que** le stabilisateur (15) est supporté sur la caisse de véhicule (16).
